# EUROPEAN PATENT APPLICATION

(11) **EP 4 819 266 A1**
(43) Date of publication of application: **07.10.2026**
(21) Application number: 25169874.2
(22) Date of filing: 10.04.2025
(51) Int. Cl.: H01M 10/04, H01M 50/103, H01M 50/15, H01M 50/169, H01M 50/176, H01M 50/188, H01M 50/536, H01M 50/55, H01M 50/553, H01M 50/566

(54) **SECONDARY BATTERY AND PREPARATION METHOD THEREOF, AND ENERGY STORAGE BATTERY PACK AND PREPARATION METHOD THEREOF**

(30) Priority: 02.04.2025 CN 202510412376
(71) Applicant: Zhejiang Jinko Energy Storage Co., Ltd., Jiaxing, Zhejiang (CN)
(72) Inventor: ZENG, Xianrong, Haining (CN); YANG, Zixiang, Haining (CN); ZHANG, Luhua, Haining (CN)
(74) Representative: Balder IP Law, S.L.

(57) **Abstract**

A secondary battery and its preparation method, as well as an energy storage battery pack and its preparation method are provided, relating to the field of energy storage batteries. The preparation method for the secondary battery includes: forming a battery terminal (110), the battery terminal (110) including a body part (111) defined with a first groove (114), an extension part (112), a protruding part (113) located at bottom of the first groove (114), and a groove defined on a side of the body part (111); assembling a battery cap, assembling the battery terminal (110), an insulating layer (107), an aluminum sheet (101) and a sealing ring (108) sequentially, the sealing ring (108) clamping an end of the battery terminal (110), and an inner side of the sealing ring (108) corresponds to the groove of the battery terminal (110), and a top surface of the sealing ring (108) faces a bottom surface of a part of the aluminum sheet (101); providing a winding core (130), performing second welding processing on an electrode tab (131) and a connector tab (120); assembling the winding core (130) and the battery cap, extruding the winding core (130) and the battery cap so that the end of the battery terminal (110) away from the extension part (112) is located in a second groove (123) of the connector tab (120), with the sealing ring (108) filling the groove; performing third welding processing on the battery terminal (110) and the connector tab (120) to form a first welding layer; and assembling a casing (100) and the winding core (130), to improve the volume utilization of the secondary battery.

## Description

### TECHNICAL FIELD

Various embodiments of the present invention relate to the field of energy storage batteries, and in particular, to a secondary battery and a method of preparing the secondary battery, we well as an energy storage battery pack and a method of preparing the energy storage battery pack.

### BACKGROUND

Lithium-ion/sodium-ion batteries have become the core of the energy storage field due to their wide range of applications, such as electric vehicles, portable electronic devices, and large-scale energy storage systems. These batteries primarily include key components such as cathode materials, anode materials, separators, electrolytes, and casings. Their packaging forms include prismatic aluminum cases, prismatic pouches, cylindrical aluminum cases, and cylindrical steel cases, each designed for specific application scenarios to enhance energy density per unit volume, safety performance, and cycle life of the batteries.

Optimizing battery structure is key to improving space utilization. The assembly of battery cells in prismatic batteries typically adopts either a winding or stacking process, with the specific structure directly determining the arrangement efficiency of internal materials and space occupancy. The design of the electrode tab, whether single-sided or double-sided, must ensure effective welding of the positive and negative electrodes to the current collectors or terminals, thereby enabling electrical connection between the cell and the external circuit. Current technological advancements have improved the overall structural compactness and electrical connection efficiency of batteries by adjusting terminal configurations and internal connection layouts. However, there is still room for further breakthroughs in the volumetric utilization of battery cells.

Enhancing cell space utilization while ensuring high performance and safety, continuously optimizing battery structural design, and improving sealing performance and reliability remain key research priorities. Additionally, as market demand for electric vehicles and portable electronic devices continues to grow, stricter performance requirements are being placed on batteries. How to extend cycle life and enhance safety while maintaining battery size has also become a focal point in battery technology development.

### SUMMARY

Embodiments of the present invention provide a secondary battery and a method of preparing the secondary battery, as well as an energy storage battery pack and a method of preparing the energy storage battery pack, which at least helps reduce a height of a battery terminal, thereby improving volume utilization of the secondary battery. The present invention is set out in the appended set of claims.

According to some embodiments of the present invention, one aspect of the present invention provides a method of preparing a secondary battery, including: forming a battery terminal, where the battery terminal includes: a body part defining a first groove inside; an extension part extending from the body part in a direction away from the first groove; and a protruding part located on a part of a bottom surface of the first groove and protruding toward an opening of the first groove, where a side face of the body part defines a groove recessed towards the first groove; assembling a battery cap, where the battery terminal passes through an insulating layer and a battery terminal through hole of a aluminum sheet sequentially and extends to another end of the aluminum sheet, a sealing ring is engaged with an end of the battery terminal, an inner surface of the sealing ring is corresponding to the groove of the battery terminal, a top surface of the sealing ring is opposite to a part of a bottom surface of the aluminum sheet, and the battery terminal, the insulating layer, and the aluminum sheet jointly form the battery cap; providing a winding core, where the winding core includes a plurality of wound electrode foils and a separator, the separator is located between adjacent electrode foils, and an end of each of the electrode foils has an electrode tab; performing first welding processing on at least one of the electrode tab near an end of the electrode foil; performing second welding processing on the electrode tab and the connector tab, where the connector tab has a second groove; assembling the winding core and the battery cap, extruding the winding core and the battery cap so that the end of the battery terminal away from the protruding part is located in the second groove, and the sealing ring fills the groove; performing third welding processing on the battery terminal and the connector tab, comprising: performing the third welding processing on the battery terminal and the connector tab corresponding to the second groove from a bottom surface of the first groove excluding the protruding part to form a first welding layer; and assembling a casing and the winding core, and performing fourth welding processing for fixing the casing and the battery cap.

In some embodiments, in the assembling the battery cap, a thickness of the sealing ring is greater than a width of the groove in a first direction.

In some embodiments, before the assembling the battery cap, the thickness of the sealing ring in the first direction is D1, and after the winding core and the battery cap are assembled, the thickness of the sealing ring in the first direction is D2, and a difference between D1 and D2 is greater than or equal to a depth of the second groove.

In some embodiments, the connector tab has a first region and a second region, the electrode tab is welded to the first region, the second region defines the second groove inside, and the first region is thinned while performing welding on the electrode tab and the connector tab.

In some embodiments, a thickness of the body part exclusive the protruding part at a bottom surface of the first groove ranges from 0.5mm to 3mm, and process parameters of the third welding processing includes a protective airflow volume ranging from 30L/min to 90L/min, a power ranging from 1100W to 2000W, and a welding speed ranging from 0.4m/s to 0.6m/s.

In some embodiments, a cross-section of the first welding layer along a surface perpendicular to the connector tab is trapezoidal, a size of a top surface of the first welding layer ranges from 0.8mm to 2mm, and a height of the first welding layer ranges from 0.4mm to 0.8mm.

In some embodiments, before the performing the second welding processing on the electrode tab and the connector tab, the method further includes: bending the electrode tab, so that the electrode tab is located at an end of the connector tab away from the winding core.

In some embodiments, forming the battery terminal includes providing a metal sheet, followed by a stretching process to obtain a semi-finished battery terminal with the first groove, the extension part, and the body part; and the semi-finished battery terminal is subjected to precision machining processing, so that the protruding part is formed within the first groove, and the groove is defined on the side surface of the body part.

In some embodiments, performing the first welding processing on at least one of the electrode tab near an end of the electrode foil includes: firstly-folding the electrode tabs of the winding core, performing first shaping processing on the electrode tabs folded, performing first pre-welding processing on the electrode tabs folded, secondly-folding the electrode tabs, performing second shaping processing on the electrode tabs, and performing second pre-welding processing on the electrode tabs. The directions of the first and second folding are opposite to each other.

In some embodiments, the protruding part is formed by a thinning process applied to the bottom surface of the first groove.

According to some embodiments of the present invention, another aspect of the present invention provides a secondary battery, which includes: a battery cap and a casing, where the battery cap and the casing enclose a chamber, where the battery cap includes a aluminum sheet, an insulating layer, a battery terminal, and a sealing ring, the aluminum sheet has a battery terminal through hole, and the battery terminal passes through the battery terminal through hole; the insulating layer is located between the battery terminal and the aluminum sheet, the sealing ring is located on a side of the aluminum sheet away from the insulating layer, and the sealing ring surrounds a groove of the battery terminal; and the battery terminal includes: a body part defining a first groove inside; an extension part extending from the body part in a direction away from the first groove; and a protruding part located on a part of a bottom surface of the first groove and protruding toward an opening of the first groove, where a side face of the body part defines a groove recessed towards the first groove; a winding core located in the chamber, where the winding core includes a plurality of wound electrode foils and a separator, the separator is located between adjacent electrode foils, and an end of each of the electrode foils has an electrode tab; a connector tab, where the connector tab has a first region and a second region, the electrode tab is welded to the first region, the second region defines a second groove inside, and an end part of the battery terminal is located in the second groove; and a first welding layer, where the first welding layer includes a first part located within the battery terminal and a second part located within the second region of the connector tab.

In some embodiments, the electrode tab includes a bent part and a connecting part that are integrally formed, where the bent part is connected to the electrode foil, the connecting part is between the connector tab and the aluminum sheet, and the connecting part is welded to the connector tab.

One more aspect of the embodiments of the present invention provides a preparation method for an energy storage battery pack, including: providing a secondary battery prepared with the method in the above embodiments or the secondary battery in the above embodiments; and performing laser welding processing on the battery terminal of the secondary battery and the busbar, where the busbar has a recessed part that is inward concave, the recessed part is in the first groove, where fifth welding processing is performed on the protruding part and the recessed part, to form a second welding layer.

In some embodiments, a thickness of the protruding part ranges from 1mm to 5mm, a welding power of the fifth welding processing ranges from 4000W to 8000W, a size of a top surface of the second welding layer ranges from 0.8mm to 2mm, and a height of the second welding layer ranges from 0.8mm to 1.5mm.

Another aspect of the embodiments of the present invention provides an energy storage battery pack, which includes: a secondary battery prepared with the method in the above embodiments or the secondary battery in the above embodiments; a busbar, where the busbar is located on a side of the battery terminal that is far away from the winding core, the busbar has a recessed part that is inward concave, and the recessed part is in the first groove of the battery terminal; and a second welding layer, where the second welding layer includes a third part in the recessed part and a fourth part in the protruding part of the battery terminal.

The technical solutions in the embodiments of the present invention have at least the following advantages.

The preparation method for the secondary battery in the embodiments of this invention involves designing the battery terminal to have a body part, a protruding part, a protruding part, and a groove. The inner side of the sealing ring corresponds to the groove of the battery terminal, and the top surface of the sealing ring faces the bottom surface of a part of the aluminum sheet. The sealing ring is then used to fix the battery terminal. Subsequently, through the extruding of the connector tab, the winding core, and the first welding treatment, the battery cap including the battery terminal and the winding core can be tightly fitted, providing good sealing and reliability. This design also reduces the height of the battery terminal and the battery cap. Furthermore, the position of the sealing ring, the design of the groove of the battery terminal, and the design of the second groove in the connector tab ensure that the sealing ring can snap into the groove, achieving not only better sealing but also reducing the height occupied by the sealing ring, thereby improving the volume utilization of the secondary battery. In addition, a third welding treatment is applied to the bottom surface corresponding to the first groove of the battery terminal and the connector tab to form the first welding layer. The setting of the first groove can reduce the height of the solder and shorten the height of the battery terminal. Various methods, including the design of the battery terminal, the snap-in position of the sealing ring, and the method and position of the third welding, can all contribute to reducing the height of the battery terminal and minimizing the heat generation of the battery terminal.

### BRIEF DESCRIPTION OF THE DRAWINGS

One or more embodiments are exemplarily illustrated with corresponding figures in the accompanying drawings. These exemplary illustrations do not constitute limitations on the embodiments. Unless explicitly stated otherwise, the figures in the drawings are not subject to scale constraints. To provide a clearer explanation of the embodiments of the present invention or the technical solutions in conventional technology, a brief description to the drawings required for the embodiments is provided below. It is apparent that the figures described below represent only some embodiments of the present invention. For those skilled in the art, other drawings may also be derived from these figures without inventive efforts.
FIG. 1 is a flowchart of a method of preparing a secondary battery according to an embodiment of the present invention.
FIG. 2 is a schematic diagram of a three-dimensional structure of a battery cap according to an embodiment of the present invention.
FIG. 3 is a schematic cross-sectional structural diagram of FIG. 2 along an A1-A2 section.
FIG. 4 is an exploded view of the battery cap according to an embodiment of the present invention.
FIG. 5 is a schematic diagram of a three-dimensional structure of a battery terminal according to an embodiment of the present invention.
FIG. 6 is a schematic cross-sectional structural diagram of FIG. 5 along a B1-B2 section.
FIG. 7 is a schematic diagram of another three-dimensional structure of the battery terminal according to another embodiment of the present invention.
FIG. 8 is a schematic diagram of a three-dimensional structure of a winding core and a connector tab according to an embodiment of the present invention.
FIG. 9 is a schematic cross-sectional structural diagram of FIG. 8 along a C1-C2 section.
FIG. 10 is a schematic diagram of a three-dimensional structure of a connector tab according to an embodiment of the present invention.
FIG. 11 is a schematic cross-sectional structural diagram of FIG. 10 along a E1-E2 section.
FIG. 12 is a cross-sectional view of the battery cap and the connector tab according to an embodiment of the present invention.
FIG. 13 is an exploded view of a secondary battery according to an embodiment of the present invention.
FIG. 14 is a schematic diagram of a three-dimensional structure of the secondary battery according to an embodiment of the present invention.
FIG. 15 is a top view of the secondary battery according to an embodiment of the present invention.
FIG. 16 is a schematic diagram of a three-dimensional structure of a bar according to an embodiment of the present invention.
FIG. 17 is a schematic diagram of a three-dimensional structure of a bar according to another embodiment of the present invention.
FIG. 18 is a schematic diagram of a three-dimensional structure of an energy storage battery pack according to an embodiment of the present invention.
FIG. 19 is a schematic diagram of a three-dimensional structure of a bar and a battery terminal according to an embodiment of the present invention.
FIG. 20 is a schematic cross-sectional structural diagram of FIG. 19 along a F1-F2 section.
FIG. 21 is an exploded view of the energy storage battery pack according to an embodiment of the present invention.

### DETAILED DESCRIPTION OF THE EMBODIMENTS

As known from the background section, the current battery terminal is relatively high, resulting in a lower volume utilization of the secondary battery.

The embodiments of the present invention provide a secondary battery and its preparation method, as well as an energy storage battery pack and its preparation method. By designing the first groove and trench of the battery terminal, coordinating with the engagement method of the sealing ring, and optimizing the welding position and welding method between the battery terminal and the connector tab, the height of the battery terminal and heat generation are reduced, thereby improving the volume utilization of the secondary battery.

In the description of the embodiments of the present invention, the technical terms "first," "second," etc., are only used to distinguish different objects and should not be understood as indicating or implying relative importance or inherently specifying the number, specific order, or priority of the technical features referred to. In the description of the embodiments of the present invention, the term "a plurality of" refers to two or more unless explicitly and specifically defined otherwise.

The term "embodiment" herein means that a specific feature, structure, or characteristic described in connection with the embodiment may be included in at least one embodiment of the present invention. The occurrence of this phrase in various places in the specification does not necessarily refer to the same embodiment, nor does it indicate mutually exclusive, independent, or alternative embodiments. Those skilled in the art explicitly and implicitly understand that the embodiments described herein may be combined with other embodiments.

In the description of the embodiments of the present invention, the term "and/or" is merely a way to describe the relationship between associated objects, indicating that three possible relationships can exist. For example, "A and/or B" can mean: A exists, A and B both exist, or B exists. Additionally, the character "/" generally indicates an "or" relationship between the objects on either side.

In the description of the embodiments of the present invention, the term "a plurality of" refers to more than two (including two). Similarly, "multiple sets" refers to more than two sets (including two sets), and "multiple pieces" refers to more than two pieces (including two pieces).

In the description of the embodiments of the present invention, the technical terms such as "center," "longitudinal," "lateral," "length," "width," "thickness," "top," "bottom," "front," "rear," "left," "right," "vertical," "horizontal," "top," "bottom," "internal," "external," "clockwise," "counterclockwise," "axial," "radial," "circumferential," etc., indicating orientation or positional relationships, are based on the orientation or positional relationships shown in the drawings. These terms are used solely for the convenience of describing the embodiments of the present invention and simplifying the description, and are not meant to indicate or imply that the device or component in question must have a specific orientation or be constructed and operated in a specific orientation. Therefore, they should not be understood as limitations on the embodiments of the present invention.

In the description of the embodiments of the present invention, unless explicitly specified and defined otherwise, the technical terms "install," "connect," "couple," "fix," and similar terms should be broadly interpreted. For example, they may refer to fixed connections or detachable connections, or they may indicate integration; they can be mechanical connections or electrical connections; they can be direct connections or indirect connections via intermediate media, and may refer to communication inside two components or an interaction between two components. For those skilled in the art, the specific meaning of these terms in the embodiments of the present invention can be understood based on the context.

In the drawings corresponding to the embodiments of the present invention, in order to better understand and facilitate description, the thickness and area of layers are magnified. When describing one component (such as a layer, film, region, or substrate) above or on the surface of another component, the component may be "directly" located on the surface of the other component, or there may be a third component between the two components. Conversely, when describing one component on the surface of another component, or when one component's surface is formed or provided with another component, it means there is no third component between these two components. Additionally, when describing that a component is "substantially" formed on another component, it means that the component is not formed over the entire surface (or the front surface) of the other component, nor is it formed on the entire edge of the surface.

In the description of the embodiments of the present invention, when a component "includes" another component, unless otherwise stated, it does not exclude other components, and other components may also be included. Additionally, when a layer, film, region, or plate is referred to as "on/located on" another component, they may be "directly on" the other component (i.e., there is no other component between the two components on the surface of the other component), or there may be another component present between them. Furthermore, when a layer, film, region, plate, or other component is said to be "directly located on" another component, or when a layer, film, region, plate, or other component is located on the surface of another component, it means there is no other component between them.

The terms used in the descriptions of the various embodiments herein are only used to describe specific embodiments and are not intended to limit the present invention. As used in the descriptions of the various embodiments and the appended claims, "the part" is also intended to include the plural form unless otherwise explicitly indicated by context. These components include a layer, film, region, plate or the like.

The following will provide a detailed description of the embodiments of the present invention with reference to the accompanying drawings. However, one skilled in the art can understand that many technical details are provided in these embodiments to help the reader better understand the present invention. Even without these technical details and the various modifications and changes based on the following embodiments, the technical solutions sought to be protected by the present invention can still be implemented.

According to some embodiments of the present invention, the first aspect of the present invention provides a method of preparing a secondary battery, which aims to reduce the height of the battery terminal and improve the photovoltaic utilization of the secondary battery. The following detailed description of the secondary battery and its preparation method will be provided in conjunction with the drawings.

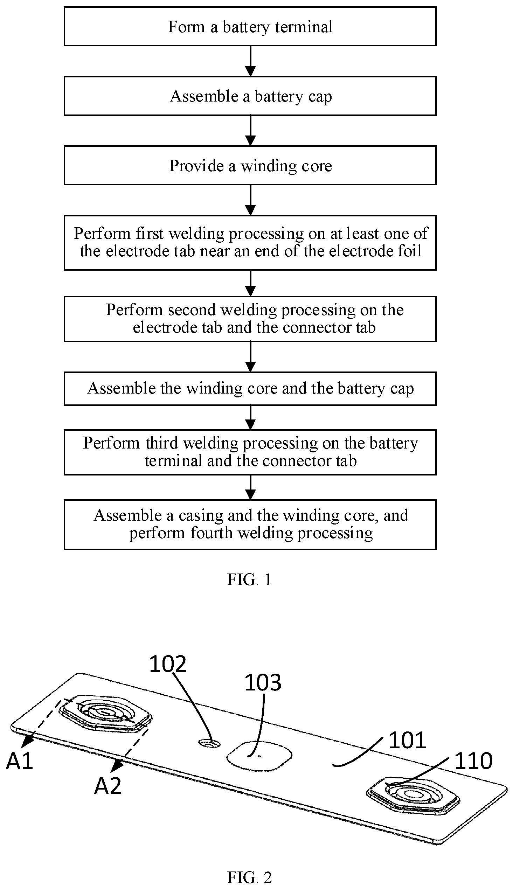

Referring to FIG. 1, the preparation method includes forming a battery terminal. The battery terminal includes: a body part defining a first groove inside, an extension part extending from the body part in a direction away from the first groove, and a protruding part located on a part of a bottom surface of the first groove and protruding toward an opening of the first groove. A side face of the body part defines a groove recessed towards the first groove. The preparation method includes assembling a battery cap, where the battery terminal passes through an insulating layer and a battery terminal through hole of a aluminum sheet sequentially and extends to another end of the aluminum sheet, a sealing ring is engaged with an end of the battery terminal, an inner surface of the sealing ring is corresponding to the groove of the battery terminal, a top surface of the sealing ring is opposite to a part of a bottom surface of the aluminum sheet, and the battery terminal, the insulating layer, and the aluminum sheet jointly form the battery cap. The preparation method includes providing a winding core, where the winding core includes a plurality of wound electrode foils and a separator, the separator is located between adjacent electrode foils, and an end of each of the electrode foils has an electrode tab. The preparation method includes performing first welding processing on at least one of the electrode tab near an end of the electrode foil, and performing second welding processing on the electrode tab and the connector tab, where the connector tab has a second groove. The preparation method includes assembling the winding core and the battery cap, extruding the winding core and the battery cap so that the end of the battery terminal away from the extension part is located in the second groove, and the sealing ring fills the groove. The preparation method includes performing third welding processing on the battery terminal and the connector tab, including: performing the third welding processing on the battery terminal and the connector tab corresponding to the second groove from a bottom surface of the first groove excluding the protruding part to form a first welding layer. The preparation method includes assembling a casing and the winding core, and performing fourth welding processing for fixing the casing and the battery cap.

The preparation method for the secondary battery in the embodiments of the present invention involves designing the battery terminal to have a body part, an extension part, a protruding part, and a groove. The inner side of the sealing ring corresponds to the groove of the battery terminal, and the top surface of the sealing ring faces the bottom surface of a part of the aluminum sheet. The sealing ring is then used to fix the battery terminal. Subsequently, through the extruding of the connector tab, the winding core, and the first welding treatment, the battery cap including the battery terminal and the winding core can be tightly fitted, providing good sealing and reliability. This design also reduces the height of the battery terminal and the height of the battery cap. Furthermore, the position of the sealing ring, the design of the groove of the battery terminal, and the design of the second groove in the connector tab ensure that the sealing ring can snap into the groove, not only achieving better sealing but also reducing the height occupied by the sealing ring, thereby improving the volume utilization of the secondary battery. In addition, a third welding treatment is applied to the bottom surface corresponding to the first groove of the battery terminal and the connector tab to form the first welding layer. The setting of the first groove can reduce the height of the solder and shorten the height of the battery terminal. Various methods, including the design of the battery terminal, the snap-in position of the sealing ring, and the method and position of the third welding, can all contribute to reducing the height of the battery terminal and minimizing the heat generated by the battery terminal.

In some embodiments, with reference to FIG. 2, FIG. 3, and FIG. 4, the battery cap is assembled. The battery cap is used to reduce overcurrent, minimize the likelihood of the flip plate being melted, and prevent the battery from catching fire or exploding. The battery cap includes: a battery terminal 110, an insulating layer 107, an aluminum sheet 101, a sealing ring 108, an explosion-proof valve sealing ring 109, and an explosion-proof plate 103.

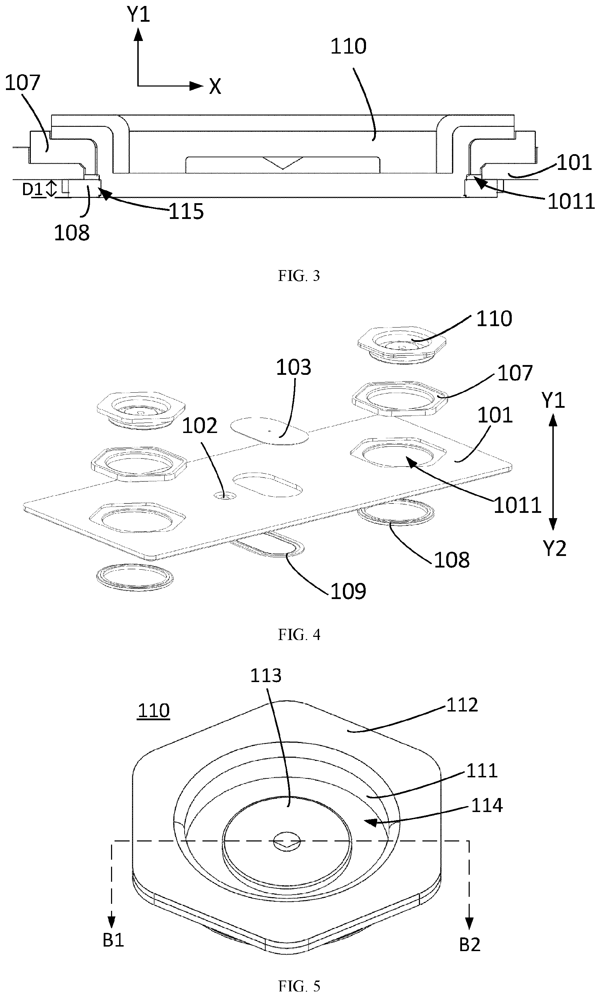

In some embodiments, with reference to FIG. 5, FIG. 6, and FIG. 7, the process steps for forming the battery terminal 110 include: providing a metal sheet, followed by a stretching process to obtain a semi-finished battery terminal with a first groove 114, an extension part 112, and a body part 111. Then, the semi-finished battery terminal is subjected to precision machining processing, so that a protruding part 113 is formed within the first groove 114, and a groove 115 is defined on the side surface of the body part 111.

In some embodiments, the stretching process may be an extrusion stretching process, meaning that the semi-finished battery terminal is formed through the extrusion stretching process, which allows the battery terminal 110 to have a high strength. This helps avoid issues such as breakage or melting when the battery terminal 110 is welded to the bus bar in subsequent steps.

In some embodiments, the process for forming the protruding part 113 may include a thinning process applied to the bottom surface of the first groove 114, causing the area near the body part 111 to become thinner. Correspondingly, the protruding part 113 in the region closer to the body part 111 protrudes toward the opening of the first groove 114.

In some embodiments, the battery terminal 110 includes a positive battery terminal and a negative battery terminal. The positive battery terminal is connected with the connector tab corresponding to the positive electrode sheet and is also connected to the positive bus bar. The negative battery terminal is connected with the connector tab corresponding to the negative electrode sheet and is also connected to the negative bus bar.

In some embodiments, the battery terminal 110 may be made of aluminum or aluminum alloy. The positive battery terminal is made of aluminum, while the negative battery terminal is made of a copper-aluminum composite material. This design ensures a good current path between the positive battery terminal and the casing, eliminating the potential difference between the positive battery terminal and the casing, thereby preventing corrosion of the casing.

The body part has opposing inner and outer surfaces. The inner wall of the first groove corresponds to the inner surface of the body part, and the groove is formed on the outer surface of the body part, located at the end of the body part that is far from the extension part.

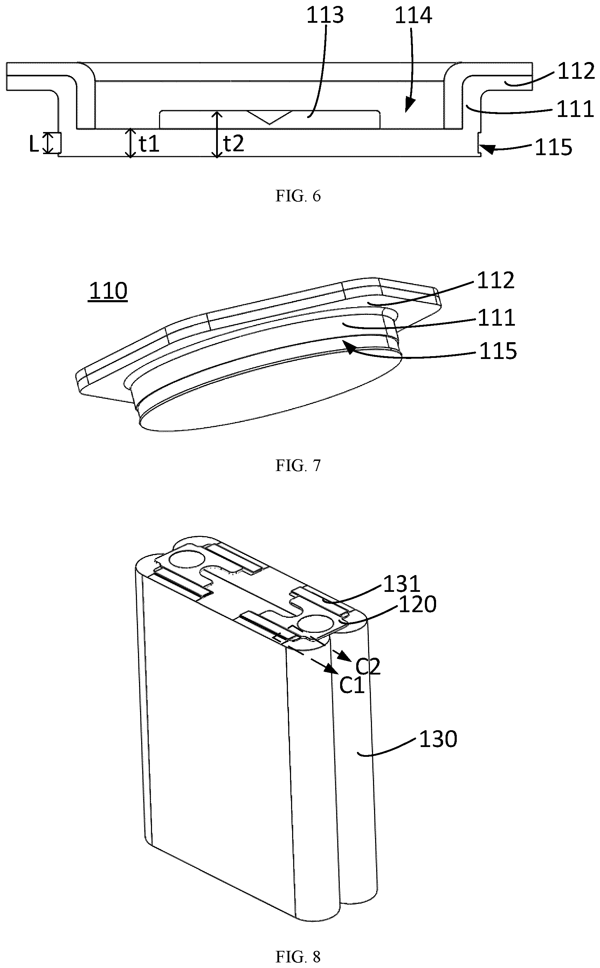

In some embodiments, with reference to FIG. 6, a width L of the groove 115 along the first direction Y2 (referring to FIG. 4) ranges from 0.8mm to 2mm. The width L of the groove 115 along the first direction Y2 ranges from 0.8mm to 1.0mm, 1.0mm to 1.2mm, 1.2mm to 1.4mm, 1.4mm to 1.6mm, 1.6mm to 1.8mm, or 1.8mm to 2.0mm. The width L of the groove 115 along the first direction Y2 may be 0.9mm, 1.1mm, 1.3mm, 1.5mm, 1.7mm, or 1.9mm.

In some embodiments, an insulating layer 107 is provided between the battery terminal 110 and the aluminum sheet 101. The insulating layer 107 can provide insulation between the positive battery terminal and the casing, as well as between the negative battery terminal and the casing. Insulating the positive battery terminal from the casing can eliminate the potential difference between the positive battery terminal and the casing, thereby preventing corrosion of the casing. Insulating the negative battery terminal from the casing helps avoid the risk of short-circuiting between the positive and negative electrodes.

In some embodiments, the insulating layer 107 is made of silicon nitride.

In some embodiments, the aluminum sheet 101 has a battery terminal through hole 1011 (referring to FIG. 4), an explosion-proof valve through hole, and a liquid injection port 102. The explosion-proof plate 103 is assembled toward the aluminum sheet 101 along the first direction Y2, while the explosion-proof valve sealing ring 109 is assembled toward the aluminum sheet 101 along the second direction Y1. The explosion-proof plate 103 and the explosion-proof valve sealing ring 109 are engaged through the explosion-proof valve through hole. The first direction Y2 and the second direction Y1 are opposite to each other, that is, the angle between the two directions is 180°.

In some embodiments, the sealing ring 108 is made of fluor rubber or ceramic.

Sealing rings 108 are provided on both the positive and negative battery terminals, so as to effectively prevent gas leakage at the positive and negative battery terminals, and enhance the overall airtightness of the secondary battery.

In some embodiments, with reference to FIG. 8, a winding core 130 is provided. The winding core 130 includes a positive electrode sheet, a separator, and a negative electrode sheet that are stacked in sequence. The battery cell is obtained by winding the positive electrode sheet, the separator, and the negative electrode sheet together to form the winding core.

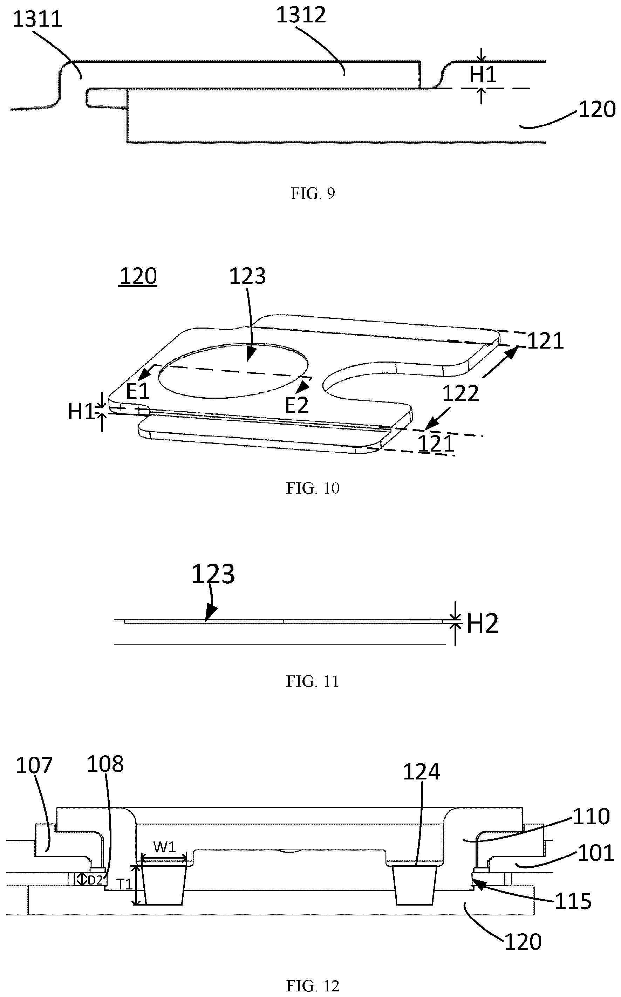

With reference to FIG. 8 and FIG. 9, the end of the positive electrode sheet is equipped with an electrode tab 131, being connected to the connector tab 120, the battery terminal 110, and the subsequent positive bus bar, facilitating current transmission. The number of electrode tabs 131 can vary, being either one or multiple. Similarly, the end of the negative electrode sheet also has an electrode tab 131.

In some embodiments, the electrode tab 131 is subjected to a first welding process, which causes the side of the electrode tab 131 near the positive electrode sheet to be subjected to an initial bend. This results in the formation of a bent part 1311 during the subsequent bending process, with the remaining part of the electrode tab serving as the connection part 1312.

The specific steps are as follows. First, the electrode tabs of the winding core are folded to ensure that the joint between the electrode tab and the main body of the electrode sheet is flat and tightly secured. The folded electrode tab can then be shaped to enhance the fit between the electrode tab and the main body of the electrode sheet, providing a stable contact foundation for subsequent welding. After the initial folding of the electrode tab, welding techniques such as laser welding or ultrasonic welding are used for the first pre-welding process. This step is designed to preliminarily fix the position of the electrode tab while ensuring a reliable electrical connection between the electrode tab and the electrode sheet, laying a stable electrical performance foundation for subsequent processes. Next, after the first pre-welding is completed, the electrode tab is subjected to a second folding to reduce the space occupied by the electrode tab and ensure more complete contact between multiple layers of electrode tabs, providing the optimal welding conditions for the second pre-welding. Based on the second folding and shaping, the electrode tab is subjected to the second pre-welding. To optimize space usage, the directions of the first and second folding are opposite. After the second folding and pre-welding, the width of the electrode tab assembly is less than or equal to the thickness of the winding core. This ensures that the pre-welded electrode tab assembly fits into one side of the winding core, making efficient use of the battery casing space.

In some embodiments, before performing the second welding processing on the electrode tab 131 and the connector tab 120, the method includes: bending the electrode tab 131 so that the electrode tab 131 is positioned at the end of the connector tab 120, away from the winding core 130.

With reference to FIG. 9, the second welding processing is performed on the electrode tab 131 and the connector tab 120. This second welding processing is used to weld the electrode tab 131 to the connector tab 120, ensuring a good electrical connection between the two. During this process, the bent part 1311 of the electrode tab 131 is further folded in the direction of the first fold, and the connection part 1312 is abutted against the surface of the connector tab 120.

In some embodiments, with reference to FIG. 10 and FIG. 11, the connector tab 120 has a first region 121 and a second region 122. The electrode tab 131 is welded to the first region 121, and the second region 122 of the connector tab 120 includes a second groove 123. During the welding processing between the electrode tab 131 and the connector tab 120, the first region 121 of the connector tab 120 is thinned by a thickness of H1. This can further reduce the height of the secondary battery, thereby improving the volume utilization of the secondary battery.

In some embodiments, the depth H2 of the second groove 123 is the same as the distance between the groove and the end of the battery terminal 110.

In some embodiments, assembling the winding core 130 and the battery cap includes pressing the winding core 130 and the battery cap to place the end of the battery terminal 110, away from the extension part 112, inside the second groove 123, with the sealing ring 108 filling the groove 115.

In some embodiments, when assembling the battery cap, the thickness of the sealing ring 108 is greater than the width of the groove 115 along the first direction. During the assembly of the winding core 130 and the battery cap, the winding core 130 and the battery cap are pressed to ensure that the sealing ring 108 fills the groove 115.

In some embodiments, before assembling the battery cap, the thickness of the sealing ring 108 along the first direction is D1. After assembling the winding core and the battery cap, the thickness of the sealing ring 108 along the first direction becomes D2. The difference between D1 and D2 is greater than or equal to the depth H2 of the second groove 123. The deformation of the sealing ring 108 is equal to the depth of the second groove 123. This ensures that while the height of the battery terminal 110 is reduced, the sealing performance between the battery terminal 110 and the battery cap is maintained, preventing leakage.

It should be noted that the thinning thickness H1 and the depth H2 of the second groove 123 are not specifically restricted in the embodiments of the present invention. The only requirement is that after the electrode tab is bent, the electrode tab should be positioned in the first region, with the strength of the first region being sufficient for the subsequent welding process. Additionally, the depth of the second groove should be adequate to accommodate the end of the battery terminal within the groove.

With reference to FIG. 12, performing the third welding processing on the battery terminal 110 and the connector tab 120, including: welding the bottom surface of the first groove 114, excluding the protruding part 113, to the corresponding second groove 123 of the connector tab 120, to form a first welding layer 124.

In some embodiments, the first welding layer includes a first part located within the battery terminal and a second part located within the second region of the connector tab. The first part refers to the material layer of the battery terminal that has been laser-treated and re-melted, while the second part refers to the material layer of the connector tab that has been laser-treated and re-melted.

In some embodiments, with reference to FIG. 6, the thickness t1 of the body part 111 at the bottom surface of the first groove 114, excluding the protruding part 113, ranges from 0.5 mm to 3 mm. The thickness t1 of the body part 111 of at bottom surface of the first groove 114 ranges from 0.5 mm to 1.0 mm, 1.0 mm to 1.5 mm, 1.5 mm to 2.0 mm, 2.0 mm to 2.5 mm, or 2.5 mm to 3.0 mm. The thickness t1 of the body part111 of the bottom surface of the first groove 114 may be 0.6mm, 0.9mm, 1.1mm, 1.3mm, 1.8mm, 2.3mm, 2.7mm, or 2.9mm.

In some embodiments, the process parameters for the third welding treatment include: a shielding gas flow rate of 30 L/min to 90 L/min, a power of 1100 W to 2000 W, and a welding speed of 0.4 m/s to 0.6 m/s. The smaller thickness of the body part 111 of the first groove 114 allows for smaller process parameters in the laser welding treatment, which in turn enables the formation of a smaller weld layer while ensuring good welding quality.

In some embodiments, with reference to FIG. 12, the cross-sectional shape of the first welding layer 124, which is perpendicular to the surface of the connector tab, is trapezoidal. The size of the top surface of the first welding layer 124, denoted as W1, ranges from 0.8 mm to 2 mm, and the height of the first welding layer 124, denoted as T1, ranges from 0.4 mm to 0.8 mm.

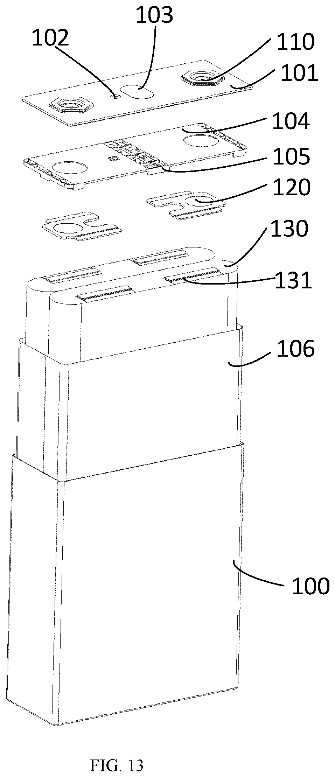

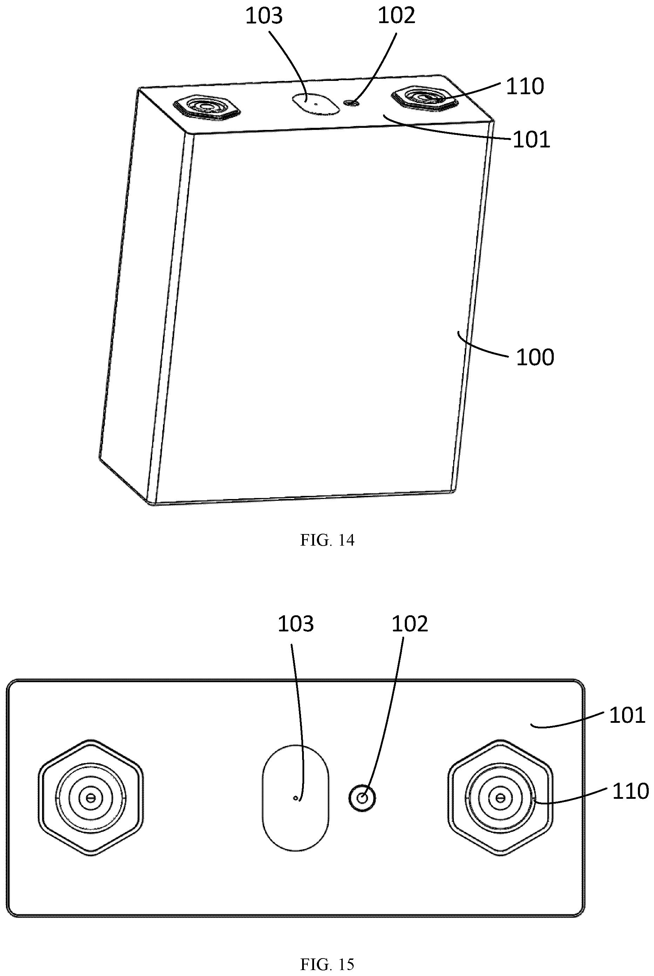

With reference to FIG. 13 and FIG. 14, the casing 100 and the winding core 130 are assembled and subjected to a fourth welding treatment. The fourth welding treatment is used to fix the casing 100 to the battery cap.

In some embodiments, the battery cap further includes: a lower plastic plate 104, which is located on the side of the aluminum sheet 101 that is closer to the winding core 130. The end of the lower plastic plate 104 has a locking part 105 that extends toward the chamber. The locking part 105 is engaged within the casing 100 and is used to secure the Mylar film and weld the Mylar film.

In some embodiments, the number of locking parts 105 ranges from 2 to 11, for example, 2, 4, 7, 9, or 11.

In some embodiments, the process of assembling the casing 100 and the winding core 130 further includes assembling the Mylar film, which is positioned between the casing 100 and the winding core 130.

The height of an existing battery terminal typically ranges from 3 mm and above, while in the secondary batteries prepared with the preparation method provided in the embodiments of the present invention, the height of the battery terminal can be reduced to around 2 mm, reduced by above 30%. This allows for a significant reduction in the height of the battery terminal.

The preparation method for the secondary battery in the embodiments of the present invention involves designing the battery terminal 110 to have a body part 111, an extension part 112, a protruding part 113, and a groove 115. The inner side of the sealing ring 108 corresponds to the groove 115 of the battery terminal 110, and the top surface of the sealing ring 108 faces the bottom surface of a part of the aluminum sheet 101. The sealing ring 108 is then used to fix the battery terminal 110. Subsequently, through the extruding of the connector tab 120, the winding core 130, and the first welding treatment, the battery cap including the battery terminal 110 and the winding core 130 can be tightly fitted, providing good sealing and reliability. This design also reduces the height of the battery terminal 110 and the battery cap. Furthermore, the position of the sealing ring 108, the design of the groove 115 of the battery terminal 110, and the design of the second groove 123 in the connector tab 120 ensure that the sealing ring 108 can snap into the groove 115, not only achieving better sealing but also reducing the height occupied by the sealing ring 108, thereby improving the volume utilization of the secondary battery. In addition, a third welding treatment is applied to the bottom surface corresponding to the first groove 114 of the battery terminal 110 and the connector tab 120 to form the first welding layer 124. The setting of the first groove 114 can reduce the height of the solder and shorten the height of the battery terminal 110. Various methods, including the design of the battery terminal 110, the snap-in position of the sealing ring 108, and the method and position of the third welding, can all contribute to reducing the height of the battery terminal 110 and minimizing the heat generation of the battery terminal 110.

Accordingly, another aspect of the embodiments of the present invention also provides a secondary battery, which can be prepared with the preparation method in the previous embodiments. The technical features that are the same as or corresponding to those in the above embodiments are not elaborated further here.

Referring to FIG. 12 to FIG. 15, a secondary battery includes: a battery cap and a casing 100, where the battery cap and the casing 100 enclose a chamber. The battery cap includes an aluminum sheet 101, an insulating layer 107, a battery terminal 110, and a sealing ring 108. The aluminum sheet has a battery terminal through hole 1011, and the battery terminal 110 passes through the battery terminal through hole 1011. The insulating layer 107 is located between the battery terminal 110 and the aluminum sheet 101, the sealing ring 108 is located on a side of the aluminum sheet 101 away from the insulating layer 107, and the sealing ring 108 surrounds a groove 115 of the battery terminal 110. The battery terminal 110 includes a body part 11 defining a first groove 114 inside, an extension part 112 extending from the body part 111 in a direction away from the first groove 114, and a protruding part 113 located on a part of a bottom surface of the first groove 114 and protruding toward an opening of the first groove 114. A side face of the body part 111 away from the extension part 112 defines a groove 115 recessed towards the first groove 114, the insulating layer 107 is positioned between the extension part 112 and the aluminum sheet 101, and the sealing ring 108 is partially engaged within the groove 115. A winding core 130 is located in the chamber. The winding core 130 includes a plurality of wound electrode foils and a separator, the separator is located between adjacent electrode foils, and an end of each of the electrode foils has an electrode tab 131. A connector tab 120 has a first region 121 and a second region 122, the electrode tab 131 is welded to the first region 121, the second region 122 defines a second groove 123 inside, and an end part of the battery terminal 110 is located in the second groove 123. A first welding layer 124 includes a first part located within the battery terminal 110 and a second part located within the second region 122 of the connector tab 120.

In some embodiments, referring to FIG. 4, the battery cap includes a battery terminal 110, an insulating layer 107, an aluminum sheet 101, a sealing ring 108, an explosion-proof valve sealing ring 109, and an explosion-proof plate 103.

In some embodiments, the battery terminal 110 includes a positive battery terminal and a negative battery terminal.

In some embodiments, with reference to FIG. 6, a width L of the groove 115 along the first direction Y2 (referring to FIG. 4) ranges from 0.8mm to 2mm.

In some embodiments with reference to FIG. 4, the aluminum sheet 101 has a battery terminal through hole 1011, an explosion-proof valve through hole, and a liquid injection port 102. The explosion-proof plate 103 and the explosion-proof valve sealing ring 109 are engaged through the explosion-proof valve through hole.

In some embodiments, the electrode tab 131 includes a bent part 1311 and a connecting part 1312 that are integrally formed, where the bent part 1311 is connected to the electrode foil, the connecting part 1312 is located between the connector tab 120 and the aluminum sheet 101, and the connecting part 1312 is welded to the connector tab 120.

In some embodiments, the battery cap further includes: a lower plastic plate 104, which is located on the side of the aluminum sheet 101 that is closer to the winding core 130. The end of the lower plastic plate 104 has a locking part 105 that extends toward the chamber. The locking part 105 is engaged within the casing 100. The number of locking parts 105 ranges from 2 to 11.

In some embodiments, the top surface of the connector tab 120 facing the battery cap is higher than or flush with the surface of the groove 115 facing the winding core 130.

In some embodiments, the thickness t1 of the body part 111 at the bottom surface of the first groove 114, excluding the protruding part, ranges from 0.5 mm to 3 mm. A cross-sectional shape of the first welding layer 124, which is perpendicular to the surface of the connector tab, is trapezoidal. The size of the top surface of the first welding layer 124, denoted as W1, ranges from 0.8 mm to 2 mm, and the height of the first welding layer 124, denoted as T1, ranges from 0.4 mm to 0.8 mm.

Correspondingly, another aspect of the embodiments of the present invention further provides a preparation method for an energy storage battery pack, including: providing a secondary battery prepared with the method any one of the foregoing embodiments or the secondary battery in any one of the foregoing embodiments, which is the same as or corresponding to the foregoing embodiments, and details are not detailed here.

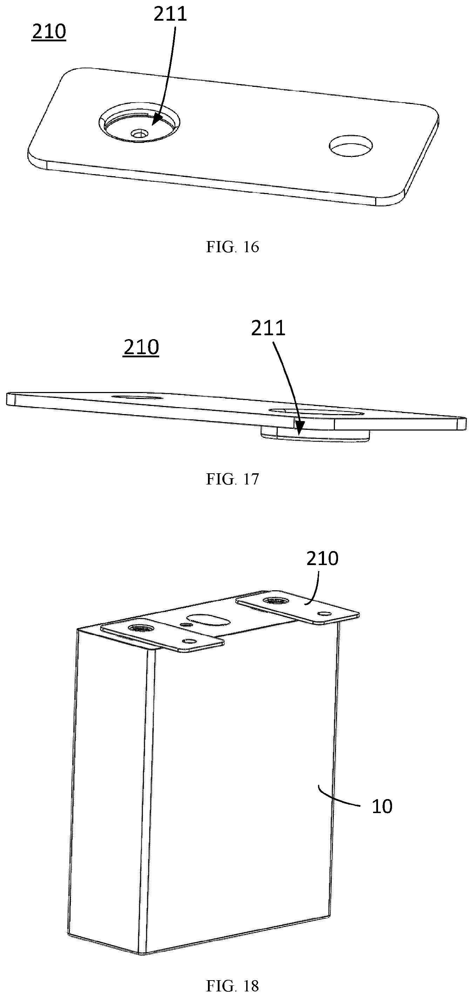

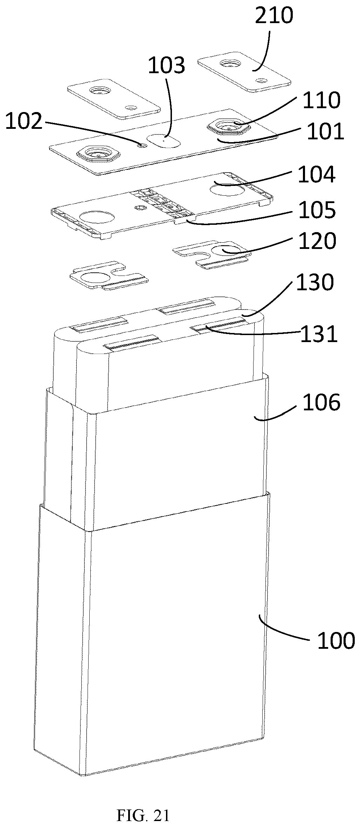

Referring to FIG. 16 to and FIG. 21, the preparation method includes: providing a secondary battery prepared with the method according to any one of the foregoing embodiments or a secondary battery according to any one of the foregoing embodiments; and performing laser welding processing on the battery terminal 110 of the secondary battery and the busbar 210, where the busbar 210 has a recessed part 211 that is inward concave, the recessed part 211 is in the first groove 114, where fifth welding processing is performed on the protruding part and the recessed part 211, to form a second welding layer 212.

In some embodiments, referring to FIG. 6, the thickness t2 of the protruding part ranges from 1mm to 5mm, for example, 1.0mm to 1.5mm, 1.5mm to 2.0mm, 2.0mm to 2.5mm, 2.5mm to 3.0mm, 3.0mm to 3.5mm, 3.5mm to 4.0mm, 4.0mm to 4.5mm, or 4.5mm to 5.0mm. The thickness t2 of the protruding part is 1.3mm, 1.8mm, 2.3mm, 2.7mm, 3.2mm, 3.7mm, 4.3mm, 4.7mm, or 4.9mm.

In some embodiments, a welding power of the fifth welding processing ranges from 4000W to 8000W.

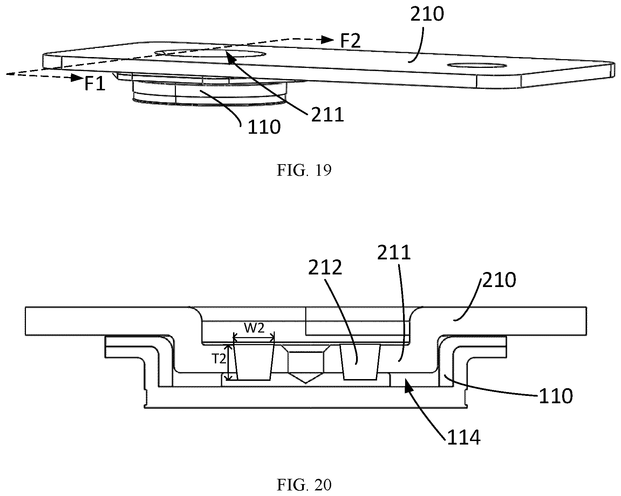

In some embodiments, referring to FIG. 20, the cross-section of the second welding layer 212, which is perpendicular to the surface of the connector tab, is trapezoidal. The width W2 of the top surface of the second welding layer 212 ranges from 0.8mm to 2mm, and the height T2 of the second welding layer 212 ranges from 0.8mm to 1.5mm.

In some embodiments, the second welding layer includes a third part located within the recessed part and a fourth part located within the protruding part of the battery terminal. The third part refers to the material layer of the battery electrode tab that is remelted after laser processing, and the fourth part refers to the material layer of the battery terminal that is remelted after laser processing.

In some embodiments, the busbar 210 includes a positive busbar and a negative busbar. The positive busbar is welded to the positive electrode foil, and the negative busbar is welded to the negative electrode foil.

The preparation method of the energy storage battery pack in the embodiments of the present invention involves the design of the first groove 114 of the battery terminal 110 and the design of the recessed part 211 of the busbar 210, allows the recessed part 211 of the busbar 210 to be located within the first groove 114 of the battery terminal 110 and in contact with the protruding part. This can reduce the height of the busbar 110 and busbar 210 as a whole. Furthermore, the welding area between the battery electrode tab 210 and the battery terminal 110 is located within the recessed part 211, which can reduce the height of the solder or welding layer, thereby shortening the height of the secondary battery and improving volume utilization.

Accordingly, in another aspect, the embodiment of the present invention further provides an energy storage battery pack, which includes: a secondary battery prepared with the preparation method in any of the above embodiments, or the secondary battery as described in any of the above embodiments. The technical features that are the same as or correspond to those of the above embodiments are not described in detail here.

Referring to FIG. 20 and FIG. 21, an energy storage battery pack includes: a secondary battery prepared with the preparation method as described in any of the above embodiments, or the secondary battery as described in any of the above embodiments; a busbar 210, where the busbar 210 is located on a side of the battery terminal 110 that is far away from the winding core, the busbar 210 has a recessed part 211 that is inward concave, and the recessed part 211 is in the first groove 114 of the battery terminal; and a second welding layer 212, where the second welding layer 212 includes a third part in the recessed part and a fourth part in the protruding part of the battery terminal 110.

In some embodiments, the busbar 210 includes a positive busbar and a negative busbar. The positive busbar is welded to the positive electrode foil, and the negative busbar is welded to the negative electrode foil.

It should be understood by those skilled in the art that the above embodiments are specific implementations of the present invention, and in practical applications, various modifications can be made in form and detail without departing from the scope of the present invention. Any person skilled in the art may make various changes and modifications without deviating from the spirit and scope of the present invention. Therefore, the scope of protection of the present invention should be subject to the scope of the claims.

## Claims

1. A method of preparing a secondary battery, comprising:
forming a battery terminal (110), wherein the battery terminal (110) includes: a body part (111) defining a first groove (114) inside, an extension part (112) extending from the body part (111) in a direction away from the first groove (114), and a protruding part (113) located on a part of a bottom surface of the first groove (114) and protruding toward an opening of the first groove (114), wherein a side face of the body part (111) defines a groove (115) recessed towards the first groove (114);
assembling a battery cap, wherein the battery terminal (110) passes through an insulating layer (107) and a battery terminal through hole (1011) of an aluminum sheet (101) sequentially and extends to another end of the aluminum sheet (101), a sealing ring (108) is engaged with an end of the battery terminal (110), an inner surface of the sealing ring (108) is corresponding to the groove of the battery terminal (110), a top surface of the sealing ring (108) is opposite to a part of a bottom surface of the aluminum sheet (101), and the battery terminal (110), the insulating layer (107), and the aluminum sheet (101) jointly form the battery cap;
providing a winding core (130), wherein the winding core (130) includes a plurality of winding electrode foils and a separator, the separator is located between adjacent electrode foils, and an end of each of the electrode foils has an electrode tab (131);
performing first welding processing on at least one of the electrode tab (131) near an end of the electrode foil;
performing second welding processing on the electrode tab (131) and the connector tab (120), wherein the connector tab (120) has a second groove (123);
assembling the winding core (130) and the battery cap, extruding the winding core (130) and the battery cap so that an end of the battery terminal (110) away from the protruding part (113) is located in the second groove (123), and the sealing ring (108) fills the groove (115);
performing third welding processing on the battery terminal (110) and the connector tab (120), including: performing the third welding processing on the battery terminal (110) and the connector tab (120) corresponding to the second groove (123) from a bottom surface of the first groove (114) excluding the protruding part (113) to form a first welding layer; and
assembling a casing (100) and the winding core (130), and performing fourth welding processing for fixing the casing (100) and the battery cap.

2. The method according to claim 1, wherein during assembling the battery cap, the sealing ring (108) has a thickness greater than a width of the groove in a first direction.

3. The method according to claim 2, wherein before assembling the battery cap, the sealing ring (108) has a first thickness in the first direction, and after the winding core (130) and the battery cap are assembled, the sealing ring (108) has a second thickness in the first direction, and a difference between the first thickness and the second thickness is greater than or equal to a depth of the second groove (123).

4. The method according to any one of claims 1 to 3, wherein the connector tab (120) has a first region and a second region, the electrode tab (131) is welded to the first region, the second region defines the second groove (123) inside, and the first region is thinned while performing welding on the electrode tab (131) and the connector tab (120).

5. The method according to any one of claims 1 to 4, wherein the body part (111) exclusive the protruding part (113) at a bottom surface of the first groove (114) has a thickness of 0.5mm to 3mm, and process parameters of the third welding processing includes a protective airflow volume ranging from 30L/min to 90L/min, a power ranging from 1100W to 2000W, and a welding speed ranging from 0.4m/s to 0.6m/s.

6. The method according to any one of claims 1 to 5, wherein a cross-section of the first welding layer along a surface perpendicular to the connector tab (120) is trapezoidal, a size of a top surface of the first welding layer ranges from 0.8mm to 2mm, and a height of the first welding layer ranges from 0.4mm to 0.8mm.

7. The method according to any one of claims 1 to 6, wherein before performing the second welding processing on the electrode tab (131) and the connector tab (120), the method further includes: bending the electrode tab (131), so that the electrode tab (131) is located at an end of the connector tab (120) away from the winding core (130).

8. The method according to any one of claims 1 to 7, wherein forming the battery terminal (110) includes providing a metal sheet, followed by a stretching process to obtain a semi-finished battery terminal with the first groove (114), the extension part (112), and the body part (111); and
the semi-finished battery terminal is subjected to precision machining processing, so that the protruding part (113) is formed within the first groove (114), and the groove (115) is defined on the side surface of the body part (111).

9. The method according to any one of claims 1 to 8, wherein performing the first welding processing on at least one of the electrode tab (131) near an end of the electrode foil includes:
firstly-folding the electrode tabs (131) of the winding core (130);
performing first shaping processing on the electrode tabs (131) folded;
performing first pre-welding processing on the electrode tabs (131) folded;
secondly-folding the electrode tabs (131);
performing second shaping processing on the electrode tabs (131); and
performing second pre-welding processing on the electrode tabs (131);
wherein the directions of the first and second folding are opposite to each other.

10. The method according to any one of claims 1 to 9, wherein the protruding part (113) is formed by a thinning process applied to the bottom surface of the first groove (114).

11. A secondary battery, comprising:
a battery cap and a casing (100), wherein the battery cap and the casing (100) enclose a chamber;
wherein the battery cap includes an aluminum sheet (101), an insulating layer (107), a battery terminal (110), and a sealing ring (108);
the aluminum sheet (101) includes a battery terminal through hole (1011), and the battery terminal (110) passes through the battery terminal through hole (1011);
the insulating layer (107) is located between the battery terminal (110) and the aluminum sheet (101), the sealing ring (108) is located on a side of the aluminum sheet (101) away from the insulating layer (107), and the sealing ring (108) surrounds a groove of the battery terminal (110); and
the battery terminal (110) includes:
a body part (111) defining a first groove (114) inside;
an extension part (112) extending from the body part (111) in a direction away from the first groove (114); and
a protruding part (113) located on a part of a bottom surface of the first groove (114) and protruding toward an opening of the first groove (114), wherein a side face of the body part (111) defines a groove recessed towards the first groove (114);
a winding core (130) located in the chamber, wherein the winding core (130) includes a plurality of wound electrode foils and a separator, the separator is located between adjacent electrode foils, and an end of each of the electrode foils has an electrode tab (131);
a connector tab (120), including a first region and a second region; wherein the electrode tab (131) is welded to the first region, the second region defines a second groove (123) inside, and an end part of the battery terminal (110) is located in the second groove (123); and
a first welding layer, including a first part located within the battery terminal (110) and a second part located within the second region of the connector tab (120).

12. The secondary battery according to claim 8, wherein the electrode tab (131) includes a bent part and a connecting part that are integrally formed, wherein the bent part is connected to the electrode foil, the connecting part is located between the connector tab (120) and the aluminum sheet, and the connecting part is welded to the connector tab (120).

13. A method of preparing an energy storage battery pack, comprising:
providing a secondary battery prepared with the method according to any one of claims 1 to 7 or the secondary battery according to any one of claims 8 to 9; and
performing laser welding processing on the battery terminal (110) of the secondary battery and a busbar, wherein the busbar has a recessed part that is inward concave, the recessed part is in the first groove (114), wherein fifth welding processing is performed on the protruding part (113) and the recessed part, to form a second welding layer.

14. The method according to claim 13, wherein a thickness of the protruding part (113) ranges from 1mm to 5mm, a welding power of the fifth welding processing ranges from 4000W to 8000W, a size of a top surface of the second welding layer ranges from 0.8mm to 2mm, and a height of the second welding layer ranges from 0.8mm to 1.5mm.

15. An energy storage battery pack, comprising:
the secondary battery prepared with the preparation method according to any one of claims 1 to 10 or the secondary battery according to any one of claims 11 to 12; and
a busbar, wherein the busbar is located on a side of the battery terminal (110) that is far away from the winding core (130), the busbar has a recessed part that is inward concave, and the recessed part is in the first groove (114) of the battery terminal (110); and
a second welding layer, wherein the second welding layer includes a third part in the recessed part and a fourth part in the protruding part (113) of the battery terminal (110).
